Europäisches Patentamt

European Patent Office

Office européen des brevets

(19)

(11) **EP 0 662 607 B1**

(12)

# FASCICULE DE BREVET EUROPEEN

(45) Date de publication et mention
de la délivrance du brevet:
**07.04.1999 Bulletin 1999/14**

(51) Int Cl.6: **G01L 21/34**, H01J 41/06

(21) Numéro de dépôt: **95400038.6**

(22) Date de dépôt: **09.01.1995**

(54) **Jauge à ionisation munie d'une cathode à micropointes**

Ionisationssensor mit Mikropunktkathode

Ionisation gauge with micropoint cathode

(84) Etats contractants désignés:
**DE GB IT**

(30) Priorité: **11.01.1994 FR 9400210**

(43) Date de publication de la demande:
**12.07.1995 Bulletin 1995/28**

(73) Titulaire: **COMMISSARIAT A L'ENERGIE ATOMIQUE**
**75015 Paris (FR)**

(72) Inventeur: **Baptist, Robert**
**F-38560 Jarrie (FR)**

(74) Mandataire: **Dubois-Chabert, Guy et al**
**c/o BREVATOME**
**25, rue de Ponthieu**
**75008 Paris (FR)**

(56) Documents cités:
**EP-A- 0 524 870**

- **MESSEN PRUFEN AUTOMATISIEREN. INTERNATIONALES FACHJOURNAL FUR MESS-, STEUER- UND REGELTECHNIK, vol. 27, BAD WORISHOFEN DE, page 216 H. BILLMAYER 'AUSGEWÄHLTE MESSPRINZIPIEN ZUR MESSUNG VON ABSOLUT- UND DIFFERENZDRÜCKEN VON GASEN'**

## Description

### Domaine technique

La présente invention se rapporte à une jauge à ionisation munie d'une cathode à micropointes et concerne, d'une façon générale, la mesure de très basses pressions dans les enceintes où règne un vide ou un ultravide et notamment la mesure de pression variant de $10^{-2}$ à $10^{-12}$ mbar.

### Etat de la technique

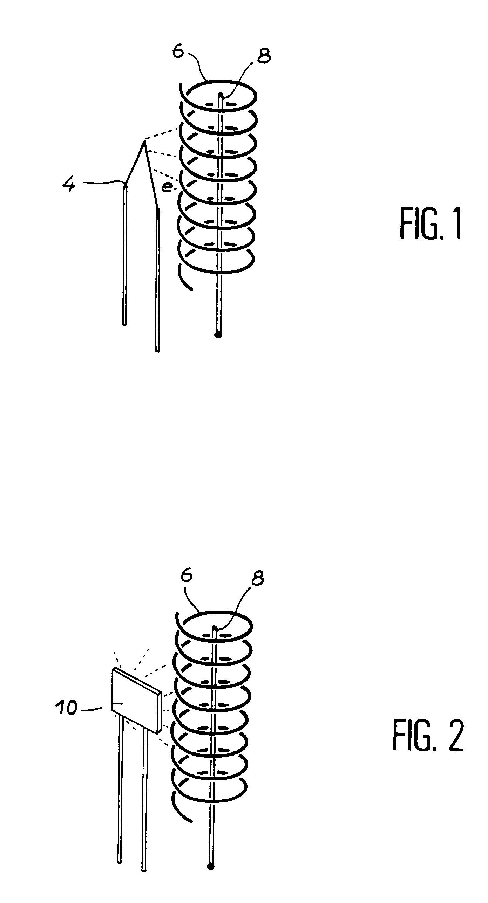

Un premier exemple de jauge à ionisation pour le vide et l'ultravide est la jauge dite "Bayard-Alpert", illustrée sur la figure 1. La jauge comprend essentiellement une cathode chaude ou filament 4, une grille-anode 6 de forme sensiblement cylindrique et présentant un axe de symétrie cylindrique selon lequel est disposé un collecteur d'ions 8 filiforme.

Les électrons thermoélectroniques émis par la cathode 4 sont accélérés dans le champ électrique créé par la polarisation de l'anode 6 et y acquièrent une énergie suffisante pour ioniser le gaz compris dans le système inter-électrodes. Les ions positifs créés par chocs sont attirés par le collecteur 8 qui se trouve à un potentiel proche de celui de l'enceinte.

Le collecteur 8 draine ainsi un courant ionique $i_+$. Les électrons, eux, sont finalement captés par l'anode 6 sous forme de courant électronique $I_e$. La pression P se déduit de la formule :

$$i_+ = K{\cdot}I_e{\cdot}P$$

où K représente un coefficient de jauge, qui tient compte des différents paramètres géométriques. Ce coefficient est en général donné par le constructeur.

Une variante de ce type de jauge a été décrite dans le brevet FR-B-2 679 653 (EP-A-0 524 870), où la structure d'ensemble est conservée, mais où, ainsi qu'illustré sur la figure 2, le filament émetteur est remplacé par une cathode à micropointes 10. Selon cette variante, la cathode à micropointes 10 a une longueur de l'ordre de grandeur du millimètre et une hauteur de quelques centimètres, soit une surface totale d'au moins une ou plusieurs dizaines de millimètres carrés, de façon à ce que la surface émissive permette d'obtenir un courant électronique comparable à celui qu'on aurait eu avec un filament.

Ces jauges à ionisation de type Bayard-Alpert peuvent présenter un défaut de complexité dans leur réalisation, en particulier en ce qui concerne la grille spiralée et le collecteur central, qui doit être fin et rectiligne. De plus, le coefficient de jauge K étant de l'ordre de 10 à 50 mbar$^{-1}$, il est nécessaire d'utiliser un fort courant électronique lorsque la pression est très faible afin d'obtenir un courant ionique mesurable avec les moyens de mesure habituels.

Dans les jauges Bayard-Alpert décrites ci-dessus, la cathode se trouve à l'extérieur du cylindre 6. Pour pouvoir fonctionner correctement, ce type de jauge nécessite un confinement cylindrique par une paroi ou une enceinte de confinement.

A cet effet, l'ensemble grille-cathode-collecteur d'ions doit :

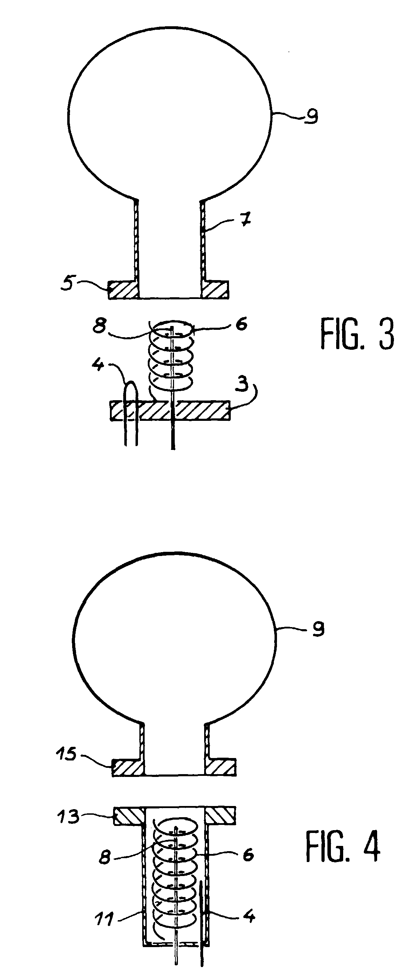

-    soit être monté, comme illustré sur la figure 3, sur une bride 3 qui est raccordée pour la mesure, à une bride 5 fixée à l'extrémité d'une tubulure 7 qui fait elle-même partie de la chambre 9 dans laquelle se trouve l'atmosphère de vide ou d'ultravide dont on veut mesurer la pression ;

-    soit être montée, comme illustré sur la figure 4, à l'intérieur d'une enveloppe 11 de forme sensiblement cylindrique, comportant une bride 13 qui sera raccordée à une bride 15 de la chambre 9 dans laquelle se trouve l'atmosphère de vide ou d'ultravide dont on veut mesurer la pression.

Dans le premier cas (figure 3), c'est la tubulure qui assure le confinement des charges. Dans le second cas (figure 4), c'est l'enveloppe qui assure ce confinement.

Un autre type de jauge, dit encore jauge "Orbitron", a été décrit par Meyer et al., dans un article intitulé "Performance Study of the Orbitron Ionization Gauge", publié dans Journal of Vacuum Science and Technology, vol. 4, n°2, p. 63-70 (1967). Sa structure est représentée sur la figure 3.

Une anode 12 portée à une tension d'environ 500 à 1000 V est située sur l'axe d'un cylindre au potentiel proche de 0 V. Ce cylindre, qui joue à la fois le rôle d'enceinte de la jauge et le rôle d'électrode de confinement, est formé par exemple d'une couche métallique 16 déposée sur la face interne d'une enveloppe en verre 14. Une source d'électrons 18 (un filament et une électrode d'écrantage, ou bien un canon à électrons) émet des électrons de telle sorte que leurs trajectoires s'enroulent autour de l'anode à la manière d'une hélice. Ces trajectoires hélicoïdales (appelées trajectoires ou orbites de Kingdom) sont comprises entre l'anode et le cylindre. Lorsqu'un électron sur une telle trajectoire entre en collision avec un atome ou une molécule, il peut l'ioniser et l'ion ainsi créé est attiré par le cylindre 16 qui joue le rôle de collecteur. Plus les trajectoires électroniques sont longues, plus les électrons ont de chances de créer un ion, et le coefficient K qui traduit cette probabilité peut prendre alors une valeur élevée. Des valeurs de K supérieures à 1000 ont été mesurées. On a donc une jauge très sensible et on peut n'utiliser que des courants électroniques très faibles, puisque les électrons seront en général "efficaces". De plus, dans une variante à deux cylindres, on peut, en mesurant le courant ionique sur le deuxième cylindre, diminuer la contribution de l'effet Roentgen et mesurer ainsi des pressions inférieures à $10^{-11}$ mbar.

Ce type de jauge présente cependant les problèmes suivants.

Si la source d'électrons est un canon à électrons, le premier problème est lié aux coûts de l'appareil. Par ailleurs, avec un canon ayant une taille d'environ quelques centimètres cubes, certains électrons, après avoir fait un aller-retour sur l'hélice, frappent le canon, si bien que la mesure du courant électronique est faussée et, donc, celle de la pression P également. De plus, le champ électrique est perturbé dans une grande région autour du canon et les électrons atteignent difficilement une trajectoire hélicoïdale; d'autre part, le champ n'est plus radial et on est obligé d'augmenter la longueur de la jauge pour séparer cette zone perturbée de la zone où le champ est correct.

Si la source d'électrons est un filament, il faut empêcher les électrons d'aller directement sur l'anode au sortir du filament, ce qui donnerait des trajectoires trop courtes. Il faut donc au minimum interposer des moyens supplémentaires tels qu'un écran sous la forme d'une électrode entre le filament et l'anode et des tubes réflecteurs à l'extrémité de la jauge, et faire en sorte que les électrons aient une composante vectorielle de la vitesse correctement orientée sur l'hélice. Un tel montage est délicat, sa reproductibilité n'est pas assurée et il faut donc étalonner chaque jauge. De plus, comme avec le canon à électrons, si le filament ou son électrode d'écrantage sont trop gros, certains électrons, après avoir fait un aller-retour sur l'hélice, frappent le filament ou son électrode d'écrantage, si bien que la mesure du courant électronique est faussée et, donc, celle de la pression également. Enfin, l'extraction des électrons à partir du filament dépendant fortement des potentiels appliqués à l'anode et au cylindre externe ainsi que de la géométrie locale autour du filament, des effets de couplage et d'oscillation apparaissent entre le filament et l'anode, ainsi que des effets non linéaires.

Quelle que soit la source d'électrons choisie, la longueur $\ell$ de ce type de jauge, qui est de l'ordre de 25 centimètres (voir figure 3) représente un sérieux inconvénient pour un appareil que l'utilisateur souhaite en général être compact.

La présente invention a donc pour objectif de proposer une solution à ces problèmes, et a pour objet une jauge à ionisation pour vide et ultravide ayant une meilleure sensibilité que celle de la jauge Bayard-Alpert à micropointes et présentant une structure moins contraignante dans sa réalisation. De plus, cette jauge doit présenter un encombrement beaucoup plus faible que celui de la jauge de type "Orbitron" et éviter les inconvénients liés à l'un ou l'autre type de source d'électrons utilisé (canon à électrons ou filaments).

## Exposé de l'invention

De façon précise, la présente invention a pour objet une jauge à ionisation comprenant une anode filiforme, un collecteur cylindrique, une source d'électrons placée entre l'anode et le collecteur, caractérisée en ce que la source d'électrons est une source d'électrons à micropointes, orientée de telle façon que le faisceau d'électrons issu de la cathode puisse se déplacer sur une trajectoire hélicoïdale autour de l'anode.

Ainsi, la structure d'une jauge selon l'invention fonctionne suivant le principe des jauges du type "Orbitron", mais s'en distingue par la nature et la position de la source électronique qui, dans l'art antérieur, était soit un filament associé à une électrode faisant écran, soit un canon à électrons. Cette source électronique est du même type que celle utilisée dans le brevet FR-B-2 679 653 (EP-A-0 524 870). Mais, elle peut être plus compacte que celle utilisée dans l'art antérieur, puisque ces dernières doivent présenter une surface d'au moins une dizaine de millimètres carrés, alors que la surface de la cathode à micropointes selon l'invention peut être réduite à 1 mm$^2$ et même moins, ce qui présente l'autre avantage de diminuer considérablement le risque d'interception du faisceau électronique sur sa trajectoire en forme d'hélice.

En outre, contrairement aux jauges Bayard-Alpert qui, ainsi qu'on l'a vu plus haut, nécessitent une enceinte de confinement, les électrons sont, dans une jauge selon l'invention, essentiellement confinés par le collecteur cylindrique ; une jauge selon l'invention peut donc être insérée directement dans la chambre dont on veut mesurer la pression

Avantageusement, la source d'électrons à micropointes comporte des électrodes de commande disposées au voisinage des micropointes et des moyens sont prévus pour porter les électrodes de commande, indépendamment les unes des autres, à des potentiels électriques, de façon à modifier la forme et/ou la direction du faisceau d'électrons issu de la source.

De façon préférée, la source d'électrons est placée à une extrémité de la jauge.

De façon plus particulière, la source présente une surface émettrice plane, qui fait un angle $\beta$ avec un plan perpendiculaire à l'axe du collecteur cylindrique, et tel que $\alpha \leq \beta \leq 90° - \alpha$, où $\alpha$ représente l'angle d'émission des électrons autour de la normale à la surface émettrice plane.

Selon un mode encore plus particulier de réalisation, le collecteur cylindrique présente une base circulaire, et la cathode est positionnée de telle manière que la zone émettrice soit approximativement localisée selon un rayon de la base circulaire.

Un des intérêt de cette structure est que l'on peut obtenir des valeurs très grandes du coefficient K puisque du fait de la trajectoire en hélice des électrons, le nombre de chocs avec le gaz résiduel est très important et, donc, le courant ionique intense : ainsi, des valeurs de l'ordre de plusieurs centaines de mbar$^{-1}$ ont pu être obtenues, alors que le coefficient K d'une jauge Bayard-Alpert classique avec filament vaut environ 20 mbar$^{-1}$. La jauge "Orbitron" décrite ci-dessus permettait également d'atteindre des valeurs de K de l'ordre de plusieurs centaines de mbar$^{-1}$ mais la longueur de la jauge était d'environ 25 cm, tandis que la longueur de la jauge selon l'invention est de l'ordre du centimètre ou de quelques centimètres. Signalons de plus que si le coefficient K est élevé, le courant détecté est intense et l'amplificateur de mesure du courant du collecteur pourra être meilleur marché.

La jauge selon l'invention offre également une plus grande facilité de construction que la jauge Bayard-Alpert à micropointes : la grille spiralée de cette dernière (voir figure 2) peut être remplacée d'un point de vue mécanique par un cylindre plein et le conducteur central (anode filiforme) n'a pas besoin d'être aussi fin (pratiquement, un rayon de l'anode ≥ 100 μm est suffisant).

De plus, le courant électronique de la jauge selon l'invention peut être abaissé d'un facteur 10 à 100 par rapport à la jauge Bayard-Alpert. Les cathodes en sont d'autant préservées que le courant extrait par unité de surface émissive est faible.

Par rapport à une jauge de type "Orbitron", on peut encore citer les deux avantages suivants :

- le faisceau électronique, du fait de la structure de la source d'électrons, acquiert naturellement une direction normale à la cathode. Il n'y a donc pas besoin d'introduire, à l'intérieur de la jauge, des éléments du type écran électrique entre la source d'électrons et l'anode ou un tube réflecteur sur une des extrémités de la jauge.
- il n'y a plus de couplage fort entre la source électronique et l'anode : la cathode à micropointes permet d'émettre les électrons avec une énergie initiale suffisante pour acquérir automatiquement une bonne trajectoire, si la cathode est orientée correctement (selon l'angle β défini ci-dessus).

Selon un autre mode particulier de réalisation de l'invention, le collecteur cylindrique a la forme de deux cylindres coaxiaux. Ainsi, l'un des deux cylindres peut collecter des ions sans recevoir de rayons X mous émis par l'anode.

L'invention a également pour objet une jauge à ionisation telle que décrite précédemment, et comportant en outre des moyens pour établir une différence de potentiel entre la grille d'extraction et les pointes de la cathode à micropointes, des moyens pour porter l'anode filiforme à un certain potentiel, des moyens pour porter le collecteur cylindrique à un autre potentiel, des moyens pour mesurer le courant électronique émis par la cathode et capté par l'anode, des moyens pour mesurer un courant ionique capté par le collecteur cylindrique, et des moyens de traitement reliés aux premier et second moyens de mesure de courant pour calculer une pression à partir des valeurs mesurées du courant ionique et du courant électronique.

Le potentiel auquel est porté l'anode filiforme est en général positif. Le collecteur cylindrique est porté à un potentiel inférieur à celui de l'anode.

Selon un mode de mise en oeuvre particulier de l'invention, celle-ci comporte en outre un circuit de synchronisation des moyens pour établir une différence de potentiel entre la grille et les pointes de la cathode, ces moyens étant choisis de façon à pouvoir fonctionner en impulsions, et des deux moyens de mesure des courants qui peuvent également fonctionner en impulsions, afin d'établir un mode de fonctionnement pulsé de la jauge.

Cette possibilité de fonctionnement en mode pulsé sera particulièrement intéressante lors de la mesure de pressions importantes : il suffit alors de réduire le courant électronique et de le pulser, afin d'éviter une détérioration de la cathode.

Ceci permet également, dans un système très sensible, de faire une mesure de pression et de garder la maîtrise de la connaissance du vide sans perturber ce dernier. Certaines expériences de physique requièrent par exemple l'arrêt des jauges car les courants électroniques perturbent les détecteurs associés à ces expériences, ou rendent "agressifs" les gaz composant le vide résiduel (en produisant des espèces ionisées devenant réactives).

## Brève description des figures

De toute façon, l'invention sera mieux comprise en se référant à la description d'exemples de mise en oeuvre donnés à titre illustratif et non limitatif et qui sera faite en se référant aux figures suivantes sur lesquelles :

- la figure 1 représente une jauge selon l'art antérieur, de type Bayard-Alpert,
- la figure 2 représente une jauge selon l'art antérieur de type Bayard-Alpert à micropointes,
- les figures 3 et 4 représentent les montages possibles d'une jauge Bayard-Alpert selon l'art antérieur,

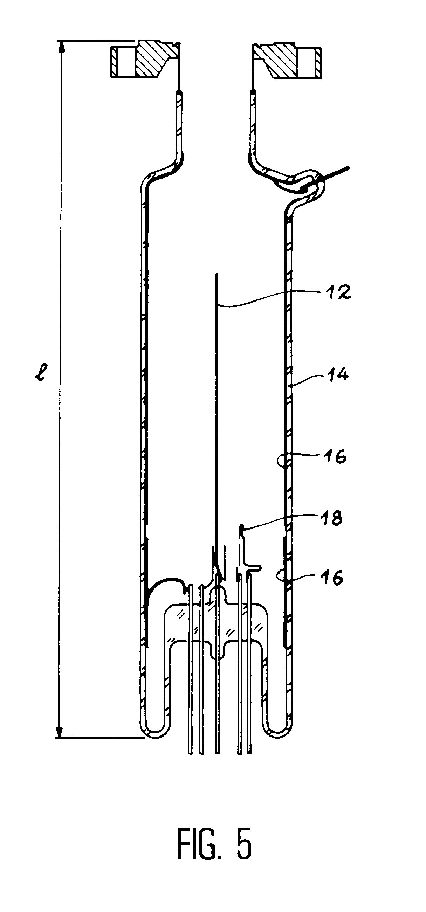

- la figure 5 représente un autre type de jauge selon l'art antérieur, appelé jauge "Orbitron",
- la figure 6 représente une jauge ionique selon un mode préféré de réalisation de l'invention,
- la figure 7 est le schéma d'un exemple de cathode à micropointes utilisée dans une jauge selon l'invention,
- la figure 8 représente une zone émettrice d'électrons d'une cathode à micropointes, avec électrodes de commande de la focalisation et/ou de la direction du faisceau d'électrons,
- les figures 9a et 9b représentent schématiquement la disposition d'une cathode à micropointes dans une jauge ionique selon l'invention,
- les figures 10a, 10b et 11 représentent divers montages possibles d'une jauge selon l'invention,
- la figure 12 représente les trajectoires hélicoïdales des électrons dans une jauge ionique selon l'invention.

## Exposé détaillé de modes de réalisation

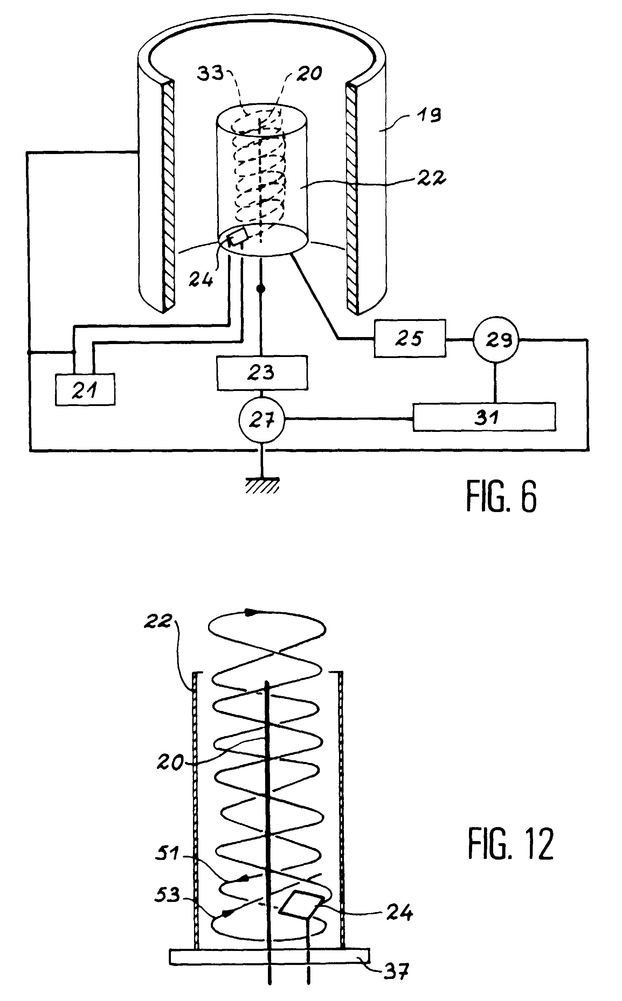

Une jauge ionique selon un premier mode préféré de réalisation de l'invention est représenté sur la figure 6, où la référence 20 représente une anode centrale filiforme, la référence 22 un cylindre dont l'axe est de préférence confondu avec l'anode centrale 20, et qui joue le rôle de collecteur d'ions et d'électrode pour repousser les électrons, et la référence 24 une cathode pour émettre les électrons, cette cathode étant une cathode à micropointes.

Avantageusement, la cathode 24 est placée à une extrémité du collecteur cylindrique 22, comme illustré sur la figure 6, son orientation étant précisée ci-dessous.

L'ensemble peut être inséré d'une façon qui sera détaillée plus loin dans une enceinte 19 où se trouve un gaz résiduel dont la pression est à mesurer.

L'anode centrale 20 et le cylindre 22 sont de réalisation simple. L'anode filiforme n'a pas besoin d'être aussi fine que dans le cas de la jauge Bayard-Alpert à micropointes, puisqu'un rayon $R_1$ tel que $1mm \geq R_1 \geq 100\mu m$ est suffisant. Quant au cylindre collecteur d'ions, il est évidemment plus simple à réaliser que la grille spiralée de cette jauge Bayard-Alpert à micropointes selon l'art antérieur. De façon avantageuse, ce cylindre sera à section circulaire (cylindre de révolution).

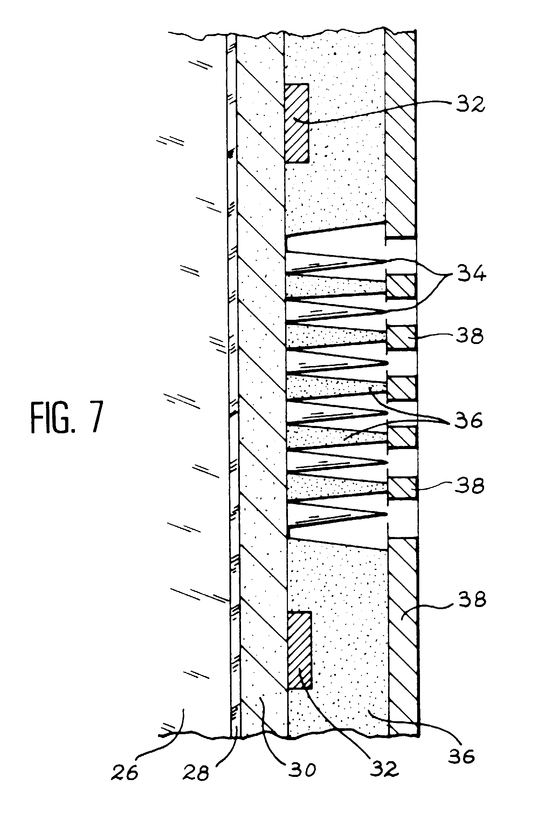

La cathode 24 est constituée d'une cathode à micropointes, du même type que celle utilisée et décrite dans le brevet FR-B-2 679 653 (EP-A-0 524 870), et qui est illustrée sur la figure 7. Cette cathode comprend essentiellement, sur un substrat 26, par exemple en verre, une couche de silice 28 recouverte d'une couche résistive 30, par exemple en silicium. Sur la couche résistive 30, sont situées les n électrodes cathodiques 32 destinées à l'alimentation de micropointes 34 qui sont par exemple en molybdène. Une couche isolante 36 percée de trous dans lesquels se trouvent les micropointes 34 sépare les électrodes cathodiques 32 de m électrodes de grille d'extraction des électrons 38 (qui peuvent être en Niobium). Les grilles d'extraction d'électrons 38 sont ajourées au-dessus de chaque micropointe 34 de façon à permettre l'émission des électrons.

Les électrodes 32 sont portées à un potentiel $V_\rho$, les électrodes de grille 38 à un potentiel $V_g$, et les électrons sont émis avec une énergie cinétique initiale $-e \cdot (V_g - V_\rho)$.

Pour plus de détails concernant cette cathode, on se reportera au document FR-B-2 679 653 (EP-A-0 524 870), notamment en ce qui concerne le choix des matériaux dont est constituée une telle cathode.

Un procédé de réalisation de cette cathode est par exemple décrit dans les brevets FR-2 663 462 et FR-2 593 953, et comporte essentiellement la mise en oeuvre des techniques de dépôt de couches par pulvérisation cathodique, de photogravure et de gravure ionique réactive des couches formées.

L'utilisation d'une structure matricielle pour cette cathode n'est pas nécessaire, sauf si on veut disposer de deux émetteurs ou plus sur le même substrat de cathode, l'utilisation de plusieurs émetteurs permettant, en cas de dysfonctionnement de l'un des émetteurs, d'avoir un ou des émetteurs de rechange.

Conformément à l'enseignement de la demande de brevet FR-2 685 811 (EP-A-0 550 335), il est possible de disposer au voisinage d'une zone émissive de la cathode, au moins deux électrodes de commande reliées à des moyens prévus pour porter ces électrodes de commande, indépendamment les unes des autres, à des potentiels électriques, les électrodes étant aptes à modifier la forme et la direction du faisceau issu de la cathode en fonction des potentiels auxquels elles sont portées.

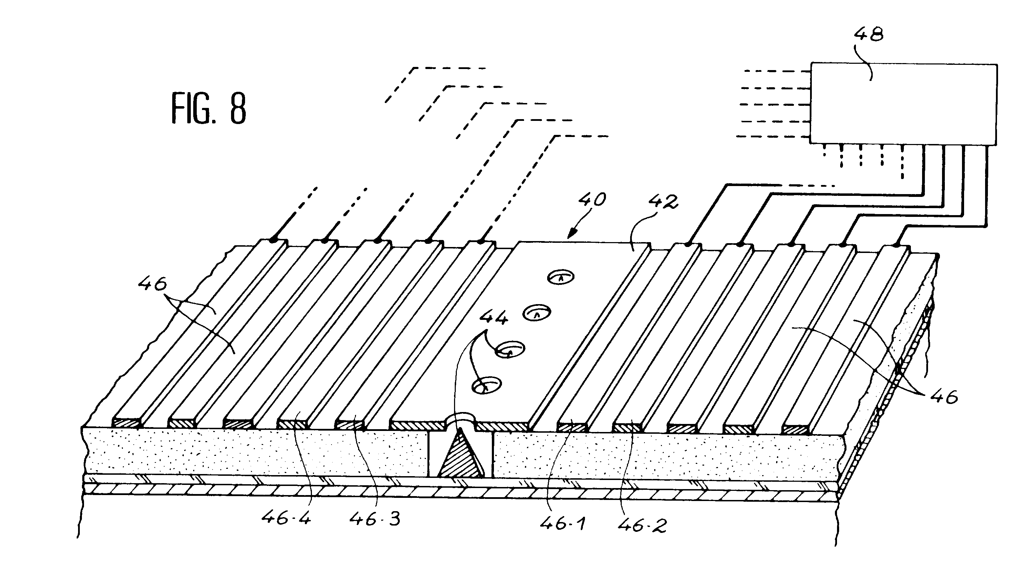

Ainsi, on a représenté sur la figure 8 une zone émettrice longitudinale 40 comportant notamment une grille 42 d'extraction d'électrons et des micropointes 44. Parallèlement à cette zone longitudinale, et sur les deux côtés, s'étendent des électrodes de commande 46, qui peuvent être formées en même temps que la grille d'extraction 42. Il faut prévoir de relier ces électrodes 46 à des moyens de polarisation 48 pour les porter à des potentiels indépendants, qui peuvent être différents les uns des autres, permettant de créer un champ électrique influençant la focalisation du faisceau d'électrons émis ainsi que la direction de ce faisceau. Par exemple, avec des électrodes de forme allongée comme sur la figure 8, il est possible d'appliquer des potentiels électriques différents à deux électrodes qui sont symétriques l'une de l'autre par rapport à la source d'électrons et ce, pour chaque couple de telles électrodes. Le faisceau subit alors une déviation en plus d'une focalisation.

Selon une variante exposée plus en détail dans le document FR-2 685 811 (EP-A-0 550 335), une zone résistive (non représentée sur la figure 8) peut être formée entre les différentes électrodes de commande adjacentes et entre la grille d'extraction et les électrodes de commande contiguës.

D'autres exemples de réalisation de ce système de commande de la focalisation et/ou de la direction du faisceau, par exemple où les électrodes de commande sont réparties de façon concentrique autour de la zone émissive, sont décrits dans la demande FR-2 685 811 (EP-A-0 550 335). Mais, dans le cadre de l'invention, l'arrangement avec les électrodes longitudinales est préférable.

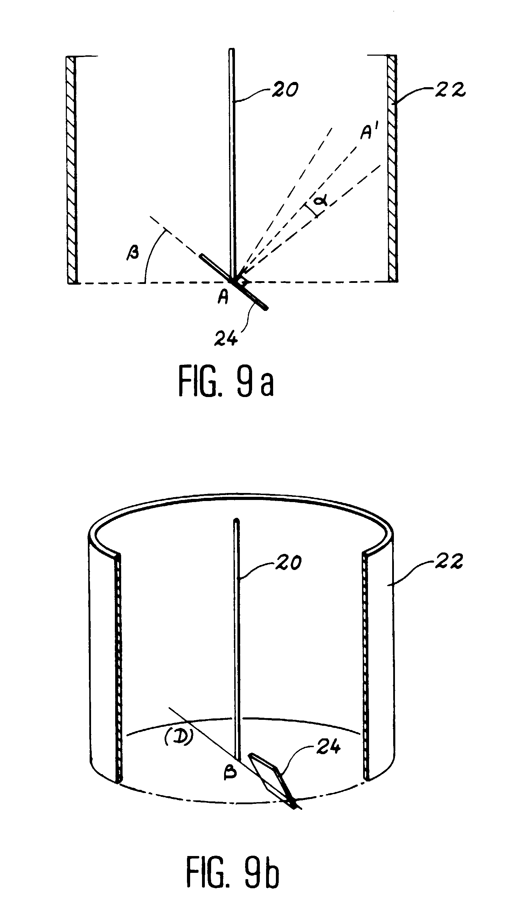

La cathode à micropointes décrite ci-dessus présente une structure plane ; il est donc possible de définir une direction normale (AA') au plan contenant cette structure (figure 9a). Autour de cette direction normale, le faisceau d'électrons émis par la cathode aura une répartition sensiblement symétrique, avec un angle de demi-ouverture au sommet noté $\alpha$.

La cathode à micropointes est placée dans la jauge, entre l'anode 20 et le cylindre 22 (figures 6 et 9b), de telle façon que le faisceau d'électrons qu'elle émet prenne une trajectoire hélicoïdale 33 (figure 6) entourant l'anode 20.

En fait, cette trajectoire dépend non seulement de la position de la cathode, mais aussi des potentiels respectifs auxquels sont portés l'anode 20, le cylindre 22 et la cathode 24. De préférence, la cathode est approximativement localisée selon un diamètre d'une section de base du cylindre, c'est-à-dire selon une direction sensiblement perpendiculaire à l'anode filiforme 20. En d'autres termes, la normale (AA') est sensiblement perpendiculaire à un diamètre D (figure 9b) de la section de base du cylindre. L'angle d'inclinaison du plan contenant la cathode à micropointes par rapport à une section de base du cylindre 22, noté $\beta$ (figures 9a et 9b), est de préférence compris entre $\alpha$ et $\frac{\pi}{2} - \alpha$.

Ainsi, des cathodes à micropointes ont été réalisées, ayant un angle $\alpha \approx 30°$, l'angle $\beta$ étant alors de préférence compris entre 30° et 60° et par exemple $\beta=45°$ ; un angle $\alpha$ plus faible que 30° pourrait être obtenu en modifiant les paramètres géométriques de la cathode à micropointes.

Les électrodes de commande décrites ci-dessus permettent de modifier l'ouverture $2\alpha$ du faisceau, et éventuellement sa direction, mais la plage d'orientation optimale de la cathode reste néanmoins toujours comprise entre $\alpha$ et $90°-\alpha$.

Ces électrodes de commande seront de préférence longitudinales et placées perpendiculairement au diamètre (D) défini ci-dessus.

La cathode peut être située approximativement à mi-chemin entre l'anode centrale et le cylindre, mais sans que cette situation soit très critique.

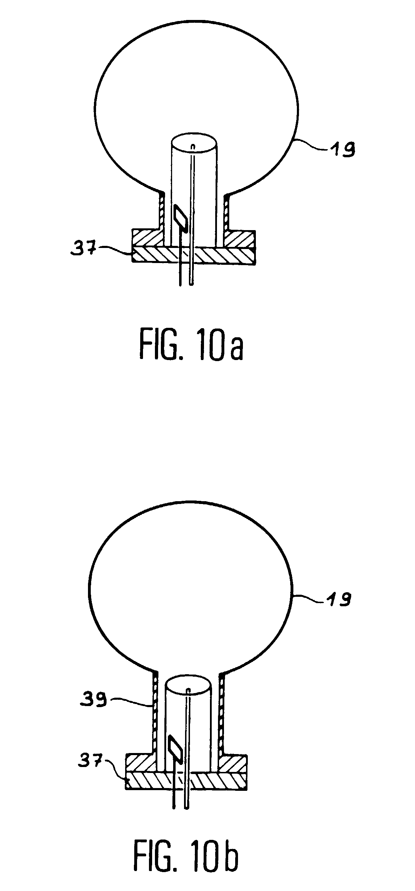

Ainsi qu'illustré sur les figures 10a et 10b, la jauge selon l'invention peut être montée sur une bride métallique 37 et être insérée aussi bien directement dans une chambre à vide 19 dont on veut déterminer la pression (figure 10a), que dans une tubulure 39 de cette chambre à vide (figure 10b). On voit là un des avantages de la jauge de l'invention par rapport à la jauge Bayard-Alpert, puisque celle-ci ne pouvait être insérée directement dans la chambre à vide, une enceinte extérieure aux électrodes devant assurer le confinement des charges.

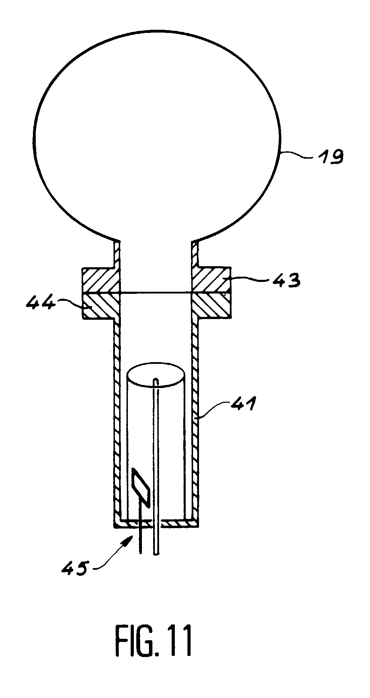

Selon une autre possibilité de montage, illustrée sur la figure 11, la jauge selon l'invention peut être insérée dans une enveloppe supplémentaire 41 entourant les électrodes et fixée sur la chambre 19 par des brides de raccordement 43, 44 communicantes. L'extrémité 45 de l'enveloppe opposée au raccordement est fermée et traversée par les connexions des électrodes. Par ailleurs, cette extrémité doit être au moins dans sa partie centrale, en regard du cylindre, conductrice.

Des moyens (réf. 21, figure 6) sont également prévus pour établir une différence de potentiel entre la grille d'extraction et les pointes de la cathode à micropointes, ainsi que des moyens 23 pour porter l'anode filiforme à un certain potentiel, des moyens 25 pour porter le cylindre 22 également à un certain potentiel, des moyens 27 pour mesurer le courant électrique $I_e$ (par

exemple un microampèremètre), des moyens 29 pour mesurer le courant ionique $i_+$ capté par le collecteur cylindrique (par exemple un nano ou picoampèremètre). On peut, de plus, prévoir des moyens de traitement 31 reliés aux moyens 27 et 29 afin de traiter les deux informations relatives aux courants $i_+$ et $I_e$ et, connaissant la valeur de K, en déduire la pression selon la formule $i_+ = K \cdot I_e \cdot P$.

En général, les différents potentiels utilisés sont référencés par rapport à une masse (par exemple 0 Volt). La chambre 19, les brides de raccordement et l'extrémité conductrice de l'enveloppe supplémentaire lorsqu'elle existe, sont elles aussi reliées à cette référence et permettent ainsi de repousser les électrons qui s'échappent des extrémités du cylindre 22 en les renvoyant dans celui-ci.

L'ensemble de ces moyens peut être prévu pour fonctionner en mode continu, ou en impulsions. Le mode de fonctionnement en impulsions peut être très utile pour mesurer des pressions importantes (comprises par exemple entre $10^{-3}$ mbar et $10^{-2}$ mbar). Il suffit, pour établir ce mode de fonctionnement, de prévoir un circuit de synchronisation (non représenté) des moyens 21 pour établir la tension au niveau de la cathode, ces moyens 21 pouvant fonctionner en impulsions, et des moyens (27, 29) de mesure des courants.

Lorsque les tensions sont appliquées à la cathode 24, un courant électronique $I_e$ est généré par celle-ci. Lorsque, en sus, des tensions sont appliquées à l'anode 20 et au collecteur 22, ce courant "s'enroule" autour de l'anode suivant une trajectoire hélicoïdale (figure 12), revient en arrière et repart dans la direction initiale jusqu'à ce que les électrons soient finalement captés par l'anode 20 (figure 12). Les charges étant confinées dans le volume défini par le cylindre 22, les parois de la chambre 19 (voir figures 10a et 10b) ou de l'enceinte 41 dans laquelle est montée la jauge (figure 11) ne jouent aucun rôle dans les trajectoires électroniques, contrairement aux jauges Bayart-Alpert.

Par contre, la bride 37 support de la jauge (figure 10a et 10b) est généralement métallique et portée au potentiel de la chambre 19 si bien que, lorsque les électrons arrivent au voisinage de cette bride, sur une trajectoire telle que 51 sur la figure 12, ils sont repoussés par celle-ci et rebroussent chemin suivant une trajectoire telle que 53 sur la figure 12.

Dans le cas d'un montage tel que celui illustré sur la figure 11, c'est l'extrémité 45 de l'enveloppe qui assure cette fonction consistant à faire rebrousser chemin aux électrons.

Dans ces conditions, les trajectoires électroniques sont particulièrement longues et la probabilité est très grande, pour les électrons, d'entrer en collision et d'ioniser des atomes ou des molécules du gaz résiduel présent dans le cylindre 22, et dont la pression est à mesurer. Les ions atomiques ou moléculaires créés dans l'espace situé entre anode et collecteur sont attirés par le collecteur, dont le potentiel est judicieusement choisi pour les attirer mais ne pas attirer les électrons. Il en résulte un courant ionique $i_+$ dont l'expression est donnée, comme dans le cas d'une jauge Bayard-Alpert par la forme : $i_+=I_e\cdot K\cdot P$.

Soient $V_a$ le potentiel de l'anode centrale, $V_c$ le potentiel du collecteur, $V_p$ le potentiel des micropointes, $V_g$ le potentiel de la grille d'extraction de la cathode à micropointes.

Afin que la jauge fonctionne de façon satisfaisante, les potentiels doivent satisfaire aux inégalités suivantes :

$$V_a>>V_g>V_p\geq V_c$$

Pratiquement , $V_a$ vaudra quelques centaines de volts et $V_g$ et $V_p$ seront choisis de façon à obtenir un courant électronique compris entre quelques centaines de nA et environ 10 µA.

Selon un exemple de réalisation, le conducteur central est porté à une haute tension ($V_a$) de l'ordre de 500 V, la cathode est polarisée à une faible tension d'environ 40 V ($V_g$=40V, $V_p$=0V), le cylindre 22 est maintenu à un potentiel $V_c$ nul. L'utilisation d'un potentiel nul permet d'éviter l'emploi d'une alimentation.

La cathode génère ainsi un courant de l'ordre de 10 µA. La tension du collecteur est, dans ces conditions, suffisante pour imposer aux électrons d'avoir des trajectoires hélicoïdales suffisamment longues pour que la valeur du coefficient K soit de quelques centaines de mbar$^{-1}$, par exemple 250 mbar$^{-1}$. Le courant ionique mesuré à une pression de 10$^{-6}$ mbar vaut alors :

$$i_+=10^{-5}x250x10^{-6}=2,5\cdot 10^{-8}A.$$

Pour une pression de 10$^{-9}$ mbar, le courant vaut 2,5·10$^{-11}$A, ce qui est encore une valeur facilement mesurable. Pour des pressions inférieures, il peut être judicieux d'augmenter le courant électronique, d'augmenter la longueur de la jauge ou d'utiliser un picoampèremètre pour mesurer le courant ionique.

Un courant électronique de l'ordre de grandeur de celui mentionné ci-dessus (10 µA) peut aisément être obtenu avec une cathode à micropointes de taille faible (de l'ordre de 1 mm$^2$). De la compacité de la cathode, il en résulte une diminution de la taille de la jauge entière (diamètre ≤30 mm, longueur environ 40 mm). La taille de ces jauges est compatible avec les brides standards habituellement utilisées dans le domaine du vide pour les jauges. De ce point de vue, la jauge ionique selon l'invention se compare de façon très avantageuse à la jauge de type "Orbitron" classique, dont la longueur est de l'ordre de 230 mm.

Lors des mesures de pression inférieure à 10$^{-9}$ mbar (notamment dans le domaine 10$^{-11}$-10$^{-12}$ mbar), l'effet Roentgen peut jouer un rôle perturbateur important, des rayons X mous émis par l'anode allant arracher du cylindre collecteur des électrons que cette même anode va ensuite capturer. Cette perturbation avait déjà été identifiée dans le cas de la jauge "Orbitron" par Meyer et al. (voir article déjà cité ci-dessus). Afin de s'en affranchir, on peut construire une jauge à ionisation selon l'invention, telle que décrite ci-dessus, et ayant, comme dans la jauge "Orbitron", un deuxième cylindre de collection de diamètre sensiblement égal à celui du premier cylindre de collection des ions et situé en bout de celui-ci, selon la même direction définie par l'anode centrale filiforme.

## Revendications

1. Jauge à ionisation comprenant une anode filiforme (20), un collecteur cylindrique (22), une source d'électrons (24) placée entre l'anode et le collecteur, caractérisée en ce que la source d'électrons est une source d'électrons à micropointes, orientée de telle façon que le faisceau d'électrons issu de la cathode puisse se déplacer sur une trajectoire hélicoïdale (33) autour de l'anode.

2. Jauge à ionisation selon la revendication 1, la source d'électrons à micropointes (24) comportant des électrodes de commande (46) disposées au voisinage des micropointes, et des moyens (48) étant prévus pour porter les électrodes de commande, indépendamment les unes des autres, à des potentiels électriques, de façon à modifier la forme et/ou la direction du faisceau d'électrons issu de la source (24).

3. Jauge à ionisation selon la revendication 1, la cathode à micropointes étant placée à une extrémité du collecteur cylindrique.

4. Jauge selon la revendication 1, la cathode présentant une surface émettrice plane, qui fait un angle β avec un plan perpendiculaire à l'axe du collecteur cylindrique.

5. Jauge selon la revendication 4, l'angle β étant tel que α≤β≤90°-α, où α représente l'angle d'émission des électrons autour de la normale à la surface émettrice plane.

6. Jauge selon l'une des revendications précédentes, le collecteur cylindrique présentant une base circulaire, et la cathode étant positionnée de telle manière que la zone émettrice soit approximativement localisée selon un rayon de la base circulaire.

7. Jauge selon la revendication 6, le collecteur cylindrique ayant la forme de deux cylindres coaxiaux.

8. Jauge selon l'une des revendications précédentes, comportant en outre des moyens (21) pour établir une différence de potentiel entre la grille d'extraction et les pointes de la cathode à micropointes (24), des moyens (23) pour porter l'anode filiforme (20) à un certain potentiel, des moyens (25) pour porter le collecteur cylindrique (22) à un autre potentiel inférieur à celui de l'anode, des moyens (27) pour mesurer le courant électronique émis par la cathode et capté par l'anode, des moyens (29) pour mesurer un courant ionique capté par le collecteur cylindrique, et des moyens de traitement (31) reliés aux premier et second moyens de mesure de courant (27, 29) pour calculer une pression à partir des valeurs mesurées du courant ionique et du courant électronique.

9. Jauge selon la revendication 8, comportant en outre un circuit de synchronisation des moyens (21) pour établir une différence de potentiel entre la grille et les pointes de la cathode, ces moyens (21) étant choisis de façon à pouvoir fonctionner en impulsions, et des moyens de mesure (27, 29) des courants, afin d'établir un mode de fonctionnement pulsé de la jauge.

## Patentansprüche

1. Ionisationssensor mit einer fadenförmigen Anode (20), einem zylindrischen Kollektor (22) und einer Elektronenquelle (24), angeordnet zwischen der Anode und dem Kollektor, **dadurch gekennzeichnet,** daß die Elektronenquelle eine derart ausgerichtete Mikrospitzen-Elektronenquelle ist, daß der von der Kathode stammende Elektronenstrahl sich auf einer Spiralbahn (33) um die Anode herum bewegen kann.

2. Ionisationssensor nach Anspruch 1, wobei die Mikrospitzen-Elektronenquelle (24) in der Nähe der Mikrospitzen angeordnete Steuerelektroden (46) und Einrichtungen (48) umfaßt, die vorgesehen sind, die Steuerelektroden unabhängig voneinander auf elektrische Potentiale zu bringen, um die Form und/oder die Richtung des von der Quelle (24) stammenden Elektronenstrahls zu modifizieren.

3. Ionisationssensor nach Anspruch 1, wobei die Mikrospitzenkathode sich an einem Ende des zylindrischen Kollektors befindet.

4. Ionisationssensor nach Anspruch 1, wobei die Kathode eine ebene Emissionsfläche aufweist, die einen Winkel β mit einer zur Achse des zylindrischen Kollektors senkrechten Ebene bildet.

5. Ionisationssensor nach Anspruch 4, wobei der Winkel β derart ist, daß $\alpha \leq \beta \leq 90° - \alpha$, wo $\alpha$ den Emissionswinkel der Elektronen um die Senkrechte zur ebenen Emissionsfläche herum darstellt.

6. Ionisationssensor nach einem der vorangehenden Ansprüche, wobei der eine kreisrunde Basis aufweisende zylindrische Kollektor und die Kathode so positioniert sind, daß die Emissionszone ungefähr entsprechend einem Radius der kreisrunden Basis lokalisiert ist.

7. Ionisationssensor nach Anspruch 6, wobei der zylindrische Kollektor die Form von zwei koaxialen Zylindern hat.

8. Ionisationssensor nach einem der vorangehenden Ansprüche, der außerdem Einrichtungen (21) zum Erzeugen einer Potentialdifferenz zwischen dem Extraktionsgitter und den Spitzen der Mikrospitzenkathode (24) umfaßt sowie Einrichtungen (23) um die fadenförmige Anode (20) auf ein bestimmtes Potential zu bringen, Einrichtungen (25) um den zylindrischen Kollektor (22) auf ein anderes, niedrigers Potential als das der Anode zu bringen, Einrichtungen (27) um den durch die Kathode emittierten und von der Anode aufgenommenen Elektronenstrom zu messen, Einrichtungen (29) zum Messen eines durch den zylindrischen Kollektor aufgenommenen Ionenstroms, und Verarbeitungseinrichtungen (31), verbunden mit den ersten und zweiten Strommeßeinrichtungen (27, 29), um aufgrund der gemessenen Ionenstrom- und Elektronenstromwerte einen Druck zu berechnen.

9. Ionisationssensor nach Anspruch 8, der außerdem eine Synchronisationsschaltung der Einrichtungen (21) zum Erzeugen einer Potentialdifferenz zwischen dem Gitter und den Spitzen der Kathode umfaßt, wobei diese Einrichtungen (21) so gewählt werden, daß sie mit Impulsen arbeiten können, und Meßeinrichtungen (27, 29) der Ströme, um einen Pulsbetriebsmodus des Sensors herzustellen.

## Claims

1. Ionization gauge comprising a filimentary anode (20), a cylindrical collector (22), an electron source (24) placed between the anode and the collector, characterized in that the electron source is a microtip electron source oriented in such a way that the electron beam leaving the cathode can move along a helicoid path (33) around the anode.

2. Ionization gauge according to Claim 1, the microtip electron source (24) having control electrodes (46) arranged in the vicinity of the microtips, and means (48) being provided for applying electric potentials to the control electrodes, independently of one another, so as to modify the shape and/or the direction of the electron beam leaving the source (24).

3. Ionization gauge according to Claim 1, the microtip cathode being placed at one end of the cylindrical collector.

4. Gauge according to Claim 1, the cathode having a plane emissive surface which makes an angle $\beta$ with a plane perpendicular to the axis of the cylindrical collector.

5. Gauge according to Claim 4, the angle $\beta$ being such that $\alpha \leq \beta \leq 90° - \alpha$, where $\alpha$ represents the emission angle of the electrons around the normal to the plane emissive surface.

6. Gauge according to one of the preceding claims, the cylindrical collector having a circular base, and the cathode being positioned in such a way that the emissive zone is approximately located along a radius of the circular base.

7. Gauge according to Claim 6, the cylindrical collector being in the form of two co-axial cylinders.

8. Gauge according to one of the preceding claims, furthermore comprising means (21) for establishing a potential difference between the extraction grid and the tips of the microtip cathode (24), means (23) for applying a certain potential to the filimentary anode (20), means (25) for applying another potential, less than that of the anode, to the cylindrical collector (22), means (27) for measuring the electronic current emitted by the cathode and picked up by the anode, means (29) for measuring an ionic current picked up by the cylindrical collector, and processing means (31) which are connected to the first and second current measurement means (27, 29) in order to calculate a pressure on the basis of the measured values of the ionic current and of the electronic current.

9. Gauge according to Claim 8, furthermore comprising a circuit for synchronizing the means (21) for establishing a potential difference between the grid and the tips of the cathode, these means (21) being selected in such a way that they can operate by pulses, and means (27, 29) for measuring the currents, in order to establish a pulsed operating mode for the gauge.

FIG. 1

FIG. 2

FIG. 3

FIG. 4

FIG. 5

FIG. 6

FIG. 12

FIG. 7

FIG. 8

40

42

48

46

44

46

46

46.4  46.3          46.1  46.2

EP 0 662 607 B1

FIG. 9 a

FIG. 9 b

FIG. 10 a

FIG. 10 b

FIG. 11